# EUROPÄISCHE PATENTANMELDUNG

(11) **EP 2 993 540 A1**
(43) Veröffentlichungstag der Anmeldung: **09.03.2016**
(21) Anmeldenummer: 14183471.3
(22) Anmeldetag: 04.09.2014
(51) Int. Cl.: G05B 19/418, G05B 19/042, G05B 19/05, H04L 12/42, H04L 12/437

(54) **Automatisierungseinrichtung zur Synchronisation in einem Ring-Netzwerk mittels dessen Rekonfiguration**

(71) Anmelder: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(57) **Zusammenfassung**

Die Erfindung betrifft eine Automatisierungseinrichtung mit Komponenten, die in einem Netzwerk gemäß einer Ringtopologie verschaltet sind, wobei die Komponenten (2, 3, 5, 7) jeweils einen Ringport (8, 9, 10, 11) zum Anschließen an eine erste benachbarte und jeweils einen Ringport (8, 9, 10, 11) zum Anschließen an eine zweite benachbarte Komponente aufweisen, wobei ferner zwei der Komponenten als Automatisierungsgeräte (2, 3) ausgebildet sind, die sich mittels eines Synchronisationsprotokolls synchronisieren, und wobei darüber hinaus eine der Komponenten als Redundanz-Manager vorgesehen ist, der zur Übermittlung von Telegrammen in einem Normalbetrieb zur Erzeugung einer logischen Ringunterbrechung einen seiner beiden Ringports blockiert und ferner dazu ausgebildet ist, im Falle einer physikalischen Ringunterbrechung die Blockierung aufzuheben und eine Ring-Rekonfiguration zu bewerkstelligen. Es werden Maßnahmen vorgeschlagen, aufgrund der eine Synchronisation der beiden Automatisierungsgeräte ohne gesonderte Synchronisationsverbindungen ermöglicht wird.

## Beschreibung

Die Erfindung betrifft eine Automatisierungseinrichtung gemäß dem Oberbegriff des Patentanspruchs 1.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei Automatisierungsgeräte, welche häufig auch als speicherprogrammierbare Steuerungen (SPS) oder als "Programmable Logic Controller" (PLC) bezeichnet werden, über zwei Synchronisationsverbindungen miteinander gekoppelt sind. Für den Fall, dass über eine dieser Verbindungen eine Kommunikation bezüglich Synchronisationsdaten zwischen den beiden Automatisierungsgeräten nicht möglich ist, z. B. weil diese Verbindung unterbrochen ist, kommunizieren die Automatisierungsgeräte über die andere Synchronisationsverbindung. Falls auf beiden Synchronisationsverbindungen ein Informationsaustausch nicht möglich ist, so weist dies auf einen Ausfall eines der Automatisierungsgeräte hin.

Auf die an dieses H-System angeschlossenen Peripherieeinheiten können prinzipiell beide Automatisierungsgeräte lesend und/oder schreibend zugreifen. Eines der beiden Automatisierungsgeräte ist bezüglich der an das System angeschlossenen Peripherie führend. Dies bedeutet, dass Ausgaben zu Peripheriegeräten bzw. Ausgangsinformationen für diese Peripheriegeräte nur von einem der beiden Automatisierungsgeräte durchgeführt werden, welches als Master arbeitet bzw. die Masterschaft übernommen hat. Damit beide Automatisierungsgeräte synchron arbeiten bzw. ablaufen können und um ein stoßfreies "Failover" zu ermöglichen, falls eines der Automatisierungsgeräte ausfällt und auf das andere Automatisierungsgerät umgeschaltet werden muss (Wechsel der Masterschaft), werden die Automatisierungsgeräte über die beiden Synchronisationsverbindungen in regelmäßigen Abständen synchronisiert. Ein stoßfreies Failover bedeutet, dass trotz einer ungeplanten Umschaltung bzw. trotz eines ungeplanten Wechsels von einem auf das andere Automatisierungsgerät diese Umschaltung bzw. dieser Wechsel sich nicht störend auf den zu steuernden technischen Prozess auswirkt. Dabei ist zulässig, dass an den Ausgängen der angeschlossenen Peripheriegeräte eine (kurze) Totzeit auftreten kann, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und ist daher zu vermeiden.

Häufig werden Komponenten, z. B. Peripheriegeräte, gemäß einer Ringtopologie an die Automatisierungsgeräte angebunden, wobei die Anbindung des jeweiligen Automatisierungsgerätes sowie des jeweiligen Peripheriegerätes an einen Ring direkt oder über ein als so genannter "Switch" bezeichnetes Gerät bewerkstelligt wird. Jedes Gerät, d. h. jedes Automatisierungsgerät, jedes Peripheriegerät oder jeder Switch, das direkt an den Ring anzubinden ist, weist zwei Ringports auf, an die jeweils ein benachbartes Gerät angeschlossen ist. Für eine derartige Ringtopologie ist ein so genanntes Media - Redundancy Protokoll (MRP) vorgesehen, mittels dessen die Verfügbarkeit des Rings erhöht wird. Ein so genannter Redundanz-Manager, welcher die Ringtopologie überwacht, unterbricht in einem Normalbetrieb logisch den Ring, indem der Redundanz-Manager einen seiner beiden Ringports blockiert. Welches der Geräte die Aufgaben des Redundanz-Managers übernimmt, wird im Rahmen einer Projektierung festgelegt oder in einem automatisierten Verfahren zwischen den Geräten "ausgehandelt". Aufgrund dieser Blockierung bzw. logischen Ringunterbrechung wird verhindert, dass z. B. die von den Automatisierungsgeräten den Peripheriegeräten übermittelten Informationen - beispielsweise Telegramme oder Datenpakete - aufgrund einer fehlerhaften Peripherieadresse im Ring kreisen. Dies bedeutet, dass aufgrund dieser logischen Ringunterbrechung die Ringtopologie aus Kommunikationssicht eine Linienstruktur repräsentiert.

Um die Ringtopologie zu überwachen, versendet der Redundanz-Manager zyklisch Testtelegramme über einen Ringport und prüft, ob diese Testtelegramme am anderen Ringport empfangen werden können, wobei dazu die logische Ringunterbrechung bzw. die Blockierung des geblockten Ringports aufgehoben wird, was bedeutet, dass für die Testtelegramme die Blockierung nicht wirkt. Gewöhnlich geht der Redundanz-Manager von einer Ringunterbrechung aus, z. B. aufgrund einer physikalischen Unterbrechung der Ringverkabelung oder aufgrund des Ausfalls eines Gerätes, falls drei versendete Testtelegramme nicht empfangen werden können. In diesem Fall leitet der Redundanz-Manager eine Rekonfiguration des Kommunikationsweges ein, indem er den Geräten die geänderte Linienstruktur anzeigt. Dazu übermittelt der Redundanz-Manager über beide Ringports die Informationen, was bedeutet, dass der Redundanz-Manager die Blockierung des blockierten Ringports aufgehoben hat und Telegramme in entgegengesetzten Richtungen auf dem Ring übertragen werden. Während einer so genannten Totzeit, welche die Zeitdauer dieser Ring-Rekonfiguration bzw. die Zeitdauer des "Einlernens" der Geräte im Hinblick auf die neue Linienstruktur repräsentiert und gewöhnlich bis zu 200ms beträgt, kann das als Master betriebene Automatisierungsgerät nicht auf die anderen Geräte lesend oder schreibend zugreifen. Dies bedeutet, dass die Ringtopologie und das für diese Topologie vorgesehene Media Redundancy Protocol (MRP) zwar eine erhöhte Verfügbarkeit ermöglichen, indem eine Ringunterbrechung beseitigt bzw. kompensiert werden kann, allerdings sind im Hinblick auf die Erreichbarkeit der Geräte während einer Ring-Rekonfiguration die Totzeiten bezüglich der Übertragung von Synchronisationsinformationen sehr störend. Um derartige Nachteile zu vermeiden, ist daher gewöhnlich vorgesehen, zur Durchführung einer Synchronisation die an einen Ring angebundenen zwei Automatisierungsgeräte zusätzlich über zwei Synchronisationsleitungen zu verbinden.

Der Erfindung liegt daher die Aufgabe zugrunde, eine Automatisierungseinrichtung der eingangs genannten Art zu schaffen, mittels welcher eine Synchronisation der beiden Automatisierungsgeräte ohne gesonderte Synchronisationsverbindungen ermöglicht wird.

Diese Aufgabe wird durch die im kennzeichnenden Teil des Patentanspruchs 1 angegebenen Maßnahmen gelöst.

Vorteilhaft ist, dass sowohl für die Synchronisation als auch für den Normalbetrieb die Ringtopologie - also eine gemeinsame "physikalische Basis" - vorgesehen ist. Die Synchronisation erfolgt über den bereits vorhandenen (MRP-)Ring, wodurch Kosten - insbesondere Kosten in Bezug auf Hardware und auf eine Verlegung von Leitungen - für eine dedizierte Synchronisationsverbindung reduziert werden.

Die Erfindung geht von der Idee aus, die nachteiligen Eigenschaften der Ringtopologie und des für diese Topologie vorgesehenen Media Redundancy Protocols (MRP) weitgehend zu vermeiden, wobei im Hinblick auf die Kommunikation die Ringtopologie derart beeinflusst wird, dass zwei Kommunikationswege als Synchronisationsverbindungen zwischen den Automatisierungsgeräten geschaffen werden. Dabei werden diese Verbindungen so gebildet, dass bei Ringunterbrechungen und Ringreparaturen die Anzahl der im Hinblick auf die Synchronisation der Automatisierungsgeräte störenden Ring-Rekonfigurationen vermindert wird. Es wird ermöglicht, auf gesonderte Synchronisationsverbindungen zu verzichten, wobei eine hohe Verfügbarkeit der Peripherie am Ring gewährleistet ist und wobei durch Ring-Rekonfigurationen verursachte Totzeiten sich nicht nachteilig auf die Synchronisation der Automatisierungsgeräte auswirken.

In einer Ausgestaltung der Erfindung ist vorgesehen, dass die Synchronisations-Telegramme den Telegrammen im Normalbetrieb überlagert sind. Der Normal- bzw. Produktivbetrieb der Automatisierungseinrichtung wird dadurch nicht störend beeinflusst, die Synchronisations-Telegramme teilen sich also mit den (Normalbetriebs-)Telegrammen das gleiche Übertragungsmedium, wobei die übermittelten (Normalbetriebs-)Telegramme geblockt bleiben und wobei ferner die Synchronisations-Telegramme von der Blockierung nicht betroffen sind.

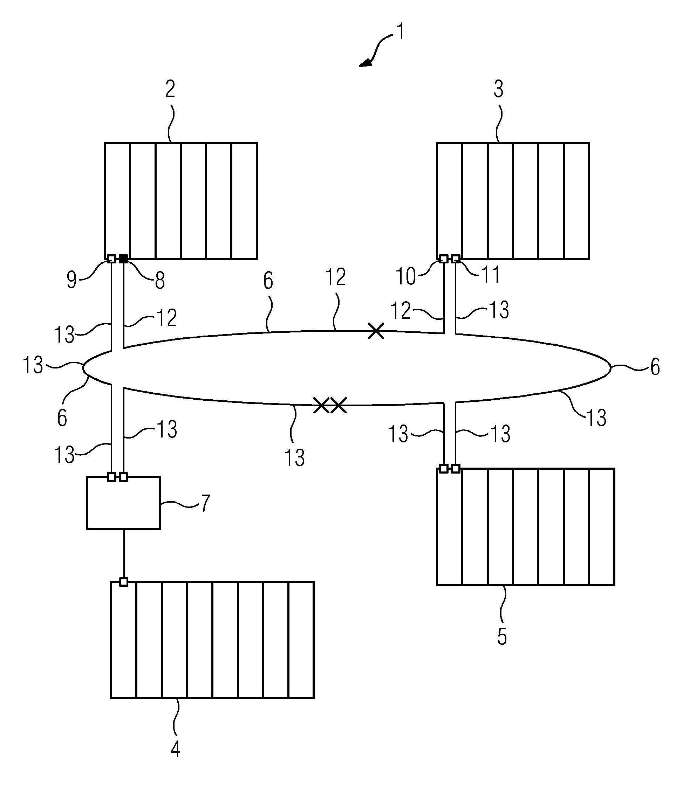

Die Erfindung wird nachfolgend anhand eines Ausführungsbeispiels unter Bezugnahme auf die einzige Figur der Zeichnung näher erläutert. Die Figur der Zeichnung zeigt in vereinfachter Form Bestandteile einer hochverfügbaren Automatisierungseinrichtung.

Die in der Figur dargestellte Automatisierungseinrichtung ist mit 1 bezeichnet und ist zur Steuerung eines technischen Prozesses bzw. einer technischen Anlage vorgesehen. Die Automatisierungseinrichtung 1 weist ein erstes und ein zweites Automatisierungsgerät 2, 3 sowie zwei dezentrale Peripherien bzw. Peripheriegeräte 4, 5 auf, die mit den Automatisierungsgeräten 2, 3 gemäß einer Media Redundancy Protocol (MRP)-Ringtopologie ringförmig über einen Ring 6 direkt oder indirekt verschaltet sind. Das jeweilige Automatisierungsgerät 2, 3 ist versehen mit einem CPU-Modul, einem Master-Modul und mit weiteren Modulen bzw. Baugruppen, z. B. mit einem Kommunikationsmodul und/oder mit Modulen für eine analoge und/oder digitale Ein/-Ausgabe, welche für einen Einsatz mit geringer dezentraler Ausbreitung vorgesehen sind. Die dezentralen Peripheriegeräte 4, 5, welche für einen Einsatz mit großer dezentraler Ausbreitung vorgesehen sind und gewöhnlich in der Nähe von Sensoren und/oder Aktuatoren eingesetzt werden, sind ebenfalls mit Modulen für eine analoge und/oder digitale Ein/-Ausgabe und ferner mit einem Interface-Modul (IM-Modul) versehen, wobei das jeweilige Peripheriegerät 4, 5 mittels diesem Interface-Modul mit dem Master-Modul des jeweiligen Automatisierungsgeräts 2, 3 kommuniziert.

Im vorliegenden Ausführungsbeispiel weisen die Automatisierungsgeräte 2, 3 sowie das Peripheriegerät 5 zwei Ringports zum direkten Anbinden an den (MRP-)Ring 6 auf, wobei der jeweilige Ringport zum Anschließen an eine benachbarte Komponente vorgesehen ist. Das Peripheriegerät 4 ist dagegen indirekt über einen ebenfalls zwei Ringports aufweisenden Switch 7 an den Ring 6 angebunden.

Eines der beiden Automatisierungsgeräte 2, 3 wird als Master-Automatisierungsgerät betrieben und ist daher im Hinblick auf die Steuerung des technischen Prozesses (Prozesssteuerung) führend. Das andere der beiden Automatisierungsgeräte 2, 3 arbeitet dagegen als Slave- bzw. Reserve-Automatisierungsgerät, wobei im Hinblick auf die Prozesssteuerung beide Automatisierungsgeräte 2, 3 das gleiche Steuerprogramm verarbeiten, allerdings Zugriffe auf die Peripheriegeräte 4, 5 nur von dem Master-Automatisierungsgerät 2 erfolgen. Das Reserve-Automatisierungsgerät greift nur dann auf die Peripherie 4, 5 lesend oder schreibend zu, falls das Master-Automatisierungsgerät ausgefallen ist, was dem Reserve-Automatisierungsgerät - wie im Folgenden gezeigt wird - über mittels des Rings 6 gebildete Synchronisationsverbindungen angezeigt wird. In diesem Fall übernimmt das Reserve-Automatisierungsgerät im Hinblick auf die Prozesssteuerung die Masterschaft.

Eine erste Synchronisationsverbindung, welche im vorliegenden Beispiel einen oberen Ringabschnitt repräsentiert, wird mittels des Rings 6 dadurch gebildet, dass eines der Automatisierungsgeräte 2, 3 die Funktionalität eines Redundanz-Managers übernimmt und dieses eine Automatisierungsgerät 2, 3 mit seinem in einem Normalbetrieb geblockten Ringport direkt mit einem der beiden Ringports des anderen der Automatisierungsgeräte 2, 3 verbunden ist. Der jeweils andere mit dem Ring 6 verbundene Ringport der Automatisierungsgeräte 2, 3 und die weiteren an den Ring angebundenen Komponenten bilden eine zweite Synchronisationsverbindung, welche einen unteren Ringabschnitt repräsentiert. Über beide Ringabschnitte tauschen die beiden Automatisierungsgeräte 2, 3 Synchronisations-Telegramme aus, wobei ein Synchronisations-Protokoll vorgesehen ist, das die Blockierung des geblockten Ringports des einen mit dem Redundanz-Manager versehenen Automatisierungsgerätes aufhebt. Eines der beiden Automatisierungsgeräte 2, 3 sendet nahezu zeitgleich bzw. parallel über den ersten und zweiten Ringabschnitt dem anderen Automatisierungsgerät 2, 3 die Synchronisations-Telegramme, wobei das empfangende Automatisierungsgerät 2, 3 das jeweils doppelt empfangene Synchronisations-Telegramm verwirft.

Im vorliegenden Ausführungsbeispiel ist vorgesehen, dass das Automatisierungsgerät 2 den Redundanz-Manager aufweist, der einen Ringport 8 im Normalbetrieb logisch blockt. Die Blockierung bewirkt aus Kommunikationssicht eine Linienstruktur und verhindert, dass zwischen den Komponenten auszutauschende Telegramme im Ring 6 kreisen. Der geblockte (innere) Ringport 8 des Automatisierungsgeräts 2 ist direkt mittels einer Leitung mit einem Ringport 10 des Automatisierungsgerätes 3 verbunden, wodurch eine erste Synchronisationsverbindung 12 hergestellt wird. Aufgrund dessen, dass der blockierte Ringport 8 des Automatisierungsgeräts 2 direkt mit dem Ringport 10 des anderen Automatisierungsgeräts 3 verbunden ist, unterbleibt nach einer Unterbrechung und nach einer Reparatur dieser Synchronisationsverbindung 12 gemäß den Vorgaben der MRP-Norm (IEC 62439) - wie im Folgenden noch gezeigt wird - eine Ring-Rekonfiguration, welche sich wegen der (Ring-Rekonfigurations-) Totzeiten nachteilig auf die Synchronisation der Automatisierungsgeräte 2, 3 auswirken würde. Es wird darauf hingewiesen, dass unter der "direkten" Verbindung des geblockten Ringports 8 des Automatisierungsgeräts 2 mit dem Ringport 10 des Automatisierungsgeräts 3 nicht nur eine direkte Verbindung mittels eines Kabels zu verstehen ist, sondern auch eine Verbindung über Mittel, welche einen Spannungsausfall (Link-Down) sowie eine Spannungswiederkehr (Link-Up) an der Verbindung zum geblockten Ringport 8 erkennen und diesem Ringport 8 vermitteln. Derartige Mittel - z. B. in Form eines Medienkonverters - ermöglichen eine Verbindung der beiden Ringports 8, 10 über eine große Entfernung beispielweise für einen Einsatz in Tunnelbauwerken für Schienenfahrzeuge.

Der jeweils andere mit dem Ring 6 verbundene Ringport 9, 11 der Automatisierungsgeräte 2, 3 und die an den Ring 6 angebundenen jeweils zwei Ringports aufweisenden Komponenten - also das Peripheriegerät 5 und der Switch 7 - bilden eine zweite Synchronisationsverbindung 13 (unterer Ringabschnitt). Über beide Synchronisationsverbindungen 12, 13 tauschen die Automatisierungsgeräte 2, 3 Synchronisations-Telegramme aus, wobei - wie erläutert - zur Durchführung der Synchronisation der Redundanz-Manager die Blockierung des blockierten Ringports 8 des Automatisierungsgeräts 2 für die Synchronisations-Telegramme aufhebt und dadurch die Synchronisationsverbindung 12 neben der Synchronisationsverbindung 13 als weitere Kommunikationsverbindung zum Synchronisieren genutzt werden kann. Mit anderen Worten: Diese Synchronisations-Telegramme repräsentieren spezielle Telegramme, die von einer logischen Blockierung eines Ringports nicht betroffen sind, wodurch über beide Linien - also die beiden Synchronisationsverbindungen 12, 13 parallel gesendet werden kann. Über beide Synchronisationsverbindungen 12, 13 sendet das Automatisierungsgerät 2 einerseits dem Automatisierungsgerät 3 Synchronisations-Telegramme und anderseits empfängt das Automatisierungsgerät 2 Synchronisations-Telegramme vom Automatisierungsgerät 3.

Im Folgenden wird angenommen, dass das Automatisierungsgerät 2 als Master-Automatisierungsgerät arbeitet und nahezu zeitgleich (quasi parallel) dem Automatisierungsgerät 3 zyklisch Synchronisations-Telegramme übermittelt. Ferner wird angenommen, dass während eines Normal- bzw. Produktivbetriebs der Ring 6 im Bereich der ersten Synchronisationsverbindung 12 - z. B. durch Ziehen eines Steckers am Ringport 10 des Automatisierungsgerätes 3 - unterbrochen wird, was in der Zeichnung durch ein "x" angedeutet ist. Der Redundanz-Manager des Automatisierungsgerätes 2 erkennt zunächst an seinem geblockten Ringport 8 einen Spannungsausfall (Link-Down). Gemäß den Vorgaben der MRP-Norm (IEC 62439) unterbleibt in diesem Fall eine Ring-Rekonfiguration, weil aus Kommunikationssicht im Normalbetrieb die Telegramme ohnehin über den nicht geblockten Ringport 9 zu den weiteren Ringkomponenten 7, 5, 3 geführt werden. Mit anderen Worten: ein "Einlernen" der Komponenten auf eine neue Linienstruktur ist nicht erforderlich. Die Ringunterbrechung wirkt sich daher nicht störend auf eine Synchronisation der beiden Automatisierungsgeräte 2, 3 aus, die Synchronisation wird über die zweite Synchronisationsverbindung 13 (unterer Ringabschnitt) durchgeführt bzw. bewerkstelligt.

Auch für den Fall, dass der Redundanz-Manager an seinem geblockten Ringport 8 wieder eine Spannung erfasst (Link-Up), was auf einen intakten oberen Ringabschnitt bzw. auf eine intakte erste Synchronisationsverbindung 12 hinweist, unterbleibt gemäß den Vorgaben der MRP-Norm eine Ring-Rekonfiguration, weil nach wie vor im Normalbetrieb die Telegramme über den nicht geblockten Ringport 9 zu den weiteren Ringkomponenten 7, 5, 3 geführt werden. Die Synchronisation der beiden Automatisierungsgeräte 2, 3 wird daher auch hier nicht störend durch den Link-Up beeinflusst, weil ein "Einlernen" auf eine neue Linienstruktur nicht erforderlich ist, wobei nach wie vor über die zweite Synchronisationsverbindung 13 und zusätzlich über die erste Synchronisationsverbindung 12 die Synchronisation erfolgen kann.

Im Folgenden wird nun angenommen, dass das Automatisierungsgerät 2 nach wie vor nahezu zeitgleich (quasi parallel) Synchronisations-Telegramme über den unteren und oberen Ringabschnitt übermittelt und dass im Bereich der zweiten Synchronisationsverbindung 13 der Ring unterbrochen wird, was in der Zeichnung durch ein "xx" angedeutet ist. Der Redundanz-Manager hebt in diesem Fall die Blockade des Ringports 8 auf und veranlasst eine Ring-Rekonfiguration, während der die Geräte bzw. Komponenten 3, 5, 7 im Hinblick auf die neue Linienstruktur "eingelernt" werden. Die Ring-Rekonfiguration wirkt sich bezüglich der Synchronisation der Automatisierungsgeräte 2, 3 nicht nachteilig aus, weil die Synchronisations-Telegramme zwischen den Automatisierungsgeräten 2, 3 über die erste Synchronisationsverbindung 12 (oberer Ringabschnitt) ausgetauscht werden. Mittels der Synchronisations-Telegramme erfolgt über diese erste Synchronisationsverbindung 12 der Datenaustausch zwischen den beiden Automatisierungsgeräten 2, 3 bzw. ein vor der Unterbrechung begonnener Datenaustausch wird ohne störende Beeinflussung über diese Synchronisationsverbindung 12 fortgesetzt.

Für den Fall, dass die Störung bzw. die Ringunterbrechung behoben wurde, blockt der Redundanz-Manager wiederum den Ringport 8 um im Produktivbetrieb die Telegramme wieder vom Ringport 9 des Automatisierungsgerätes 2 zu den weiteren Ringkomponenten 7, 5, 3 senden zu können. Der obere Ringabschnitt bzw. die erste Synchronisationsverbindung 12 wird nicht störend beeinflusst, eine bereits vor der Behebung der Ringunterbrechung gestartete Synchronisation der Automatisierungsgeräte 2, 3 wird weiterhin über die erste Synchronisationsverbindung 12 fortgesetzt.

Mittels der beschriebenen Maßnahmen werden die nachteiligen Eigenschaften der Ringtopologie und des für diese Topologie vorgesehene Media Redundancy Protocols (MRP) weitgehend vermieden, wobei ein unterer und oberer Ringabschnitt zwei Synchronisationsverbindungen bilden. Diese vermindern bei Ringunterbrechungen und Ringreparaturen die Anzahl der bezüglich einer Synchronisation der Automatisierungsgeräte störenden Ring-Rekonfigurationen. Es wird daher ermöglicht, auf gesonderte Synchronisationsverbindungen zu verzichten, wobei eine hohe Verfügbarkeit der Peripherie am Ring gewährleistet ist und wobei durch Ring-Rekonfigurationen verursachte Totzeiten sich nicht nachteilig auf die Synchronisation der Automatisierungsgeräte auswirken.

## Patentansprüche

1. Automatisierungseinrichtung mit Komponenten, die in einem Netzwerk gemäß einer Ringtopologie verschaltet sind, wobei
- die Komponenten (2, 3, 5, 7) jeweils einen Ringport zum Anschließen an eine erste benachbarte und jeweils einen Ringport zum Anschließen an eine zweite benachbarte Komponente aufweisen,
- zwei der Komponenten als Automatisierungsgeräte (2, 3) ausgebildet sind, die sich mittels eines Synchronisationsprotokolls synchronisieren, und
- eine der Komponenten als Redundanz-Manager vorgesehen ist, der zur Übermittlung von Telegrammen in einem Normalbetrieb zur Erzeugung einer logischen Ringunterbrechung einen seiner beiden Ringports (8, 9) blockiert und ferner dazu ausgebildet ist, im Falle einer physikalischen Ringunterbrechung die Blockierung aufzuheben und eine Ring-Rekonfiguration zu bewerkstelligen,
**dadurch gekennzeichnet, dass**
- der Redundanz-Manager Bestandteil eines der beiden Automatisierungsgeräte (2, 3) ist,
- der eine blockierte Ringport (8) des einen mit dem Redundanz-Manager versehenen Automatisierungsgeräts (2) und ein mit diesem blockierten Ringport (8) direkt verbundener Ringport (10) des anderen Automatisierungsgeräts (3) eine erste Synchronisationsverbindung (12) bilden,
- der jeweils andere mit dem Ring (6) verbundene Ringport (9, 11) der Automatisierungsgeräte (2, 3) und die weiteren an den Ring (6) angebundenen Komponenten (5, 7) eine zweite Synchronisationsverbindung (13) bilden,
- die Automatisierungsgeräte (2, 3) dazu ausgebildet sind, mittels Synchronisations-Telegrammen über die erste und zweite Synchronisationsverbindung (12, 13) eine Synchronisation durchzuführen, wobei zur Durchführung der Synchronisation der Redundanz-Manager die Blockierung des blockierten Ringports (8) des einen Automatisierungsgeräts (2) aufhebt.

2. Automatisierungseinrichtung nach Anspruch 1, **dadurch gekennzeichnet, dass** die Synchronisations-Telegramme den Telegrammen im Normalbetrieb überlagert sind.
